# EUROPEAN PATENT APPLICATION

(11) **EP 4 292 697 A1**
(43) Date of publication of application: **20.12.2023**
(21) Application number: 23179365.4
(22) Date of filing: 14.06.2023
(51) Int. Cl.: B01F 23/60, B01F 27/72, B01F 35/21, B01F 35/221, B01F 35/75, G01F 13/00, G01G 11/08

(54) **INDUSTRIAL DISPENSER AND/OR MIXER**

(30) Priority: 15.06.2022 IT 202200012497
(71) Applicant: Pezzoli, Paolo, 24020 Oneta (BG) (IT)
(72) Inventor: Pezzoli, Paolo, 24020 Oneta (BG) (IT)
(74) Representative: Trupiano, Federica

(57) **Abstract**

Metering/mixing device (100) comprising a double-chamber body and an inner jacket (4) which are assembled by means of two headers (17, 19); a left-handed screw conveyor (5) and a right-handed screw conveyor (6) both housed inside a case (1), to move material to be mixed; a motor (10) arranged on a part protruding from the header to move, via a system for kinematic connection, the shaft of the left-handed screw conveyor; a supporting framework configured to support the case by means of load cells (3) configured to detect the weight of the material inside the case and to transmit it to a command and control system which is configured to, depending on the weight detected, regulate the amount of material that is discharged through a discharge port (8) and to provide a command to replenish the material contained in the metering/mixing device.

## Description

The present invention relates to a device and method for accurately metering and/or mixing, in particular, raw materials and/or regenerated materials of granular (pellet), particulate matter (powder) and small tablet (bead) physical form.

It is well known that a variety of materials compatible with each other are used in several production systems. Materials which, in order to achieve particular product results, whether in terms of form or substance, must be precisely metered and just as carefully mixed before any transformation process takes place as a result of any amalgamation method or other type of treatment, e.g., mixers, fillers, etc.

The metering of the material to be processed can be carried out easily, even with hand-held metering units (such as the measuring jug used by housewives in the kitchen).

There are no difficulties in this system but special care must be taken in determining weights. A not insignificant drawback, but still a source of error, is the attention paid by the operator to always take into account the tare weight, which, if not subtracted from the weight of the material to be metered, will cause damage and/or a manufactured product that does not comply with the standard.

A special command and control system, which operates by means of continuous data processing, allows another metering method to be automated.

Automatic metering units, in most cases, are divided into volumetric metering units and gravimetric (or weight or mass) metering units.

In turn, these two macro categories of equipment are provided with a screw-conveyor, belt, vibrating channel, batch, etc. metering system.

Gravimetric metering units meter the material according to the mass thereof. The most common method of mass control is to read the weight from electronic instruments installed on the metering system for this purpose, which is why they are called "gravimetric metering units".

One of the most common methods of operating the gravimetric metering unit is to weigh an amount of material which decreases until the desired mass is reached, as it is automatically moved toward a case, or to the process machine for which the material is intended, or the like.

These types of metering units, by handling the actual weight of the material, are not affected or dependent on variations in the density of the material to be metered.

It is an object of the present invention to propose a unique solution, which allows the precise metering and/or mixing of material (for example raw and/or regenerated materials) of granular (pellet), particulate matter (powder) and small tablet (bead) physical form with a single device.

Another object of the present invention is to overcome different problems found in metering systems of the known art.

Another object of the present invention is to keep the material, or a mixture of various components, in constant motion, thus preventing it from compacting or creating areas of material stagnation.

Another object is to use a single model of metering system for various types of components, or mixture of components, the system being able to be of different sizes, depending on the type of production plant in which it is installed.

Another object is to have a metering unit with variable flow rate, that meets the different requirements for metering amounts with a simple, versatile and cost-effective solution.

An implementing block-shaped embodiment of the present invention provides a metering device comprising:
- A cylindrical double-chamber case for the material to be metered and/or mixed, after having undergone the pre-mixing cycle.
- Two cylindrical screw conveyor scrapers, of which one is left-handed and one is right-handed to mix and keep the material to be metered moving continuously at an adjustable and programmable speed.
- Drive means adapted for operating and controlling the screw conveyor scrapers;
- A port for discharging the material contained in the metering and/or mixing unit into the processing system through a controlled straight opening.
- A weighing system to weight the material to be metered.

The use of load cells makes the device very reliable, while remaining a relatively inexpensive structural solution.

In order to achieve greater stability in reading the weight, the use of at least three load cells is recommended because, for example, as the screw conveyors rotate and exert some effort, they might impart an undulatory motion to the metering/mixing device.

Further characteristics and advantages of the invention will become apparent from the reading of the following description given by way of non-limiting example, with the aid of the figures depicted in the attached drawings.
Fig. 1 is a perspective view of the partially cut-away metering /mixing device, seen from the front where the straight discharging port is located.
Fig. 2 is a perspective view of the metering /mixing device in Fig. 1 viewed from the rear, on the side of the actuator, e.g. a gear motor, which drives the screw conveyors.
Fig. 3 is a sectional view of the mixing/metering device in Fig. 1, in which the left-handed screw conveyor and the right-handed screw conveyor can be seen.
Fig. 4 is a front view of the mixing/metering device in Fig.1 on the discharge side.
Fig. 5 is a plan top view of the mixing/metering device in Fig. 1.
Fig. 6 is a front sectional view of the metering /mixing device in Fig. 1 where the mixed material is metered to the hopper of the production system that is to process the metered material or feed bagging or packaging plants or the like. In particular, the partially cut-away front view without the screw conveyors is shown, in which the discharge port and the corresponding bulkhead to adjust the port opening can be seen.
Fig. 7 is a top plan view of the portion of the metering /mixing device in Fig. 6 in which a portion, also partially cut-away, of the metering/mixing device is shown, in which the location of the discharge port at the end of the screw conveyor housing compartment can be seen.

Fig. 8 is a side view of a portion, also partially cut-away, of the metering /mixing device in Fig. 6, in which the position of the discharge port, which is located at the end of the screw conveyor housing compartments, with respect to the mixing chambers can be seen.

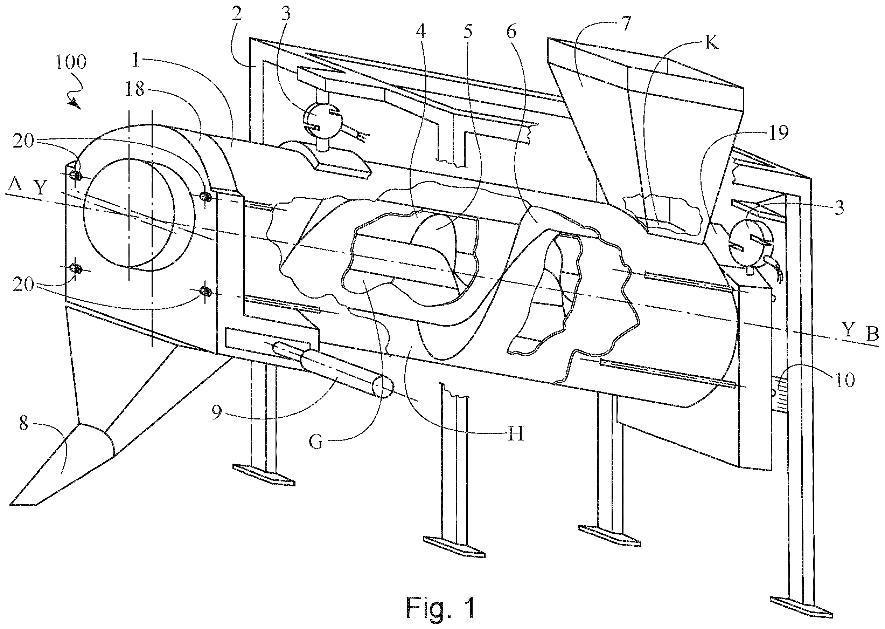

With particular reference to the figures, in Fig. 1, 1 denotes the main case of the entire mixing system as well as the jacket of the right-handed screw conveyor; 2 denotes the framework which supports the case 1 by means of the load cells 3; 4 denotes the jacket of the left-handed screw conveyor 5; on the other hand, 6 denotes the right-handed screw conveyor which rotates outside the jacket 4 and inside the case 1; 7 denotes the loading hopper with the material inlet port K; 8 denotes the discharging hopper that conveys the metered material to the hopper of the processing system; and 9 denotes the actuator that regulates the opening of the discharge bulkhead.

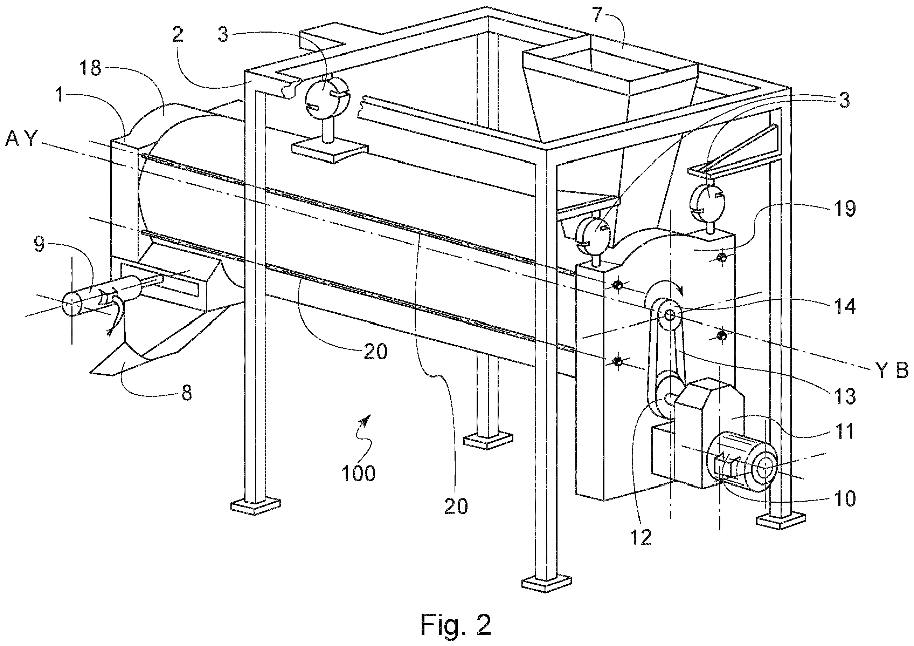

In Fig. 2, 10 identifies the actuator of the left-handed screw conveyor 5. As an example and for the ease of description, a gear motor 11 has been drawn which, on the output shaft, carries the toothed pulley 12 which, by means of the toothed belt 13, transmits the motion to the toothed pulley 14 which is keyed to the shaft of the left-handed screw conveyor 5 which protrudes from the header 19 of the main case 1.

The motor can be of a stepper or brushless type or the like, with or without an encoder (or coder in general) to control the number of revolutions.

As regards the transmission described above, different systems for kinematic connection between the electric motor 10 and the actuator of the left-handed screw conveyor 5, such as gear wheels or other motion transmission systems, are not excluded.

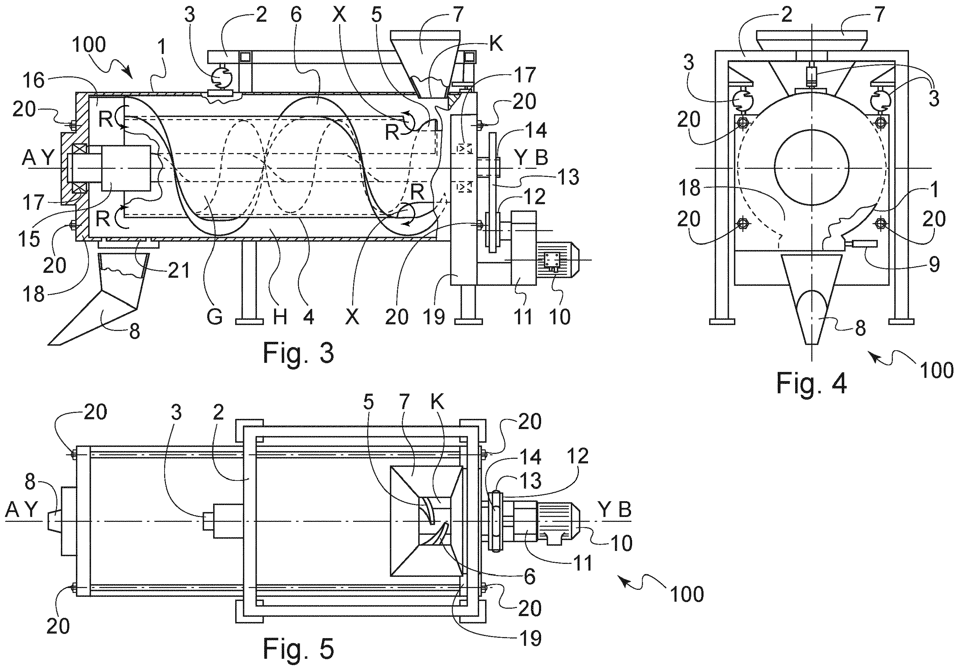

In Fig. 3, which is the longitudinal elevation view, partially cut-away, the right-handed screw conveyor 6 is attached by the hub 15 to the shaft which forms a single body with the left-handed screw conveyor 5. The scraper 16 is attached to the hub 15 and the right-handed screw conveyor 6 and is responsible for preventing the material to be metered/mixed from compacting at the end of the screw conveyor compartments.

On the motor side, X denotes the two passages formed in the jacket of the left-handed screw conveyor 5 to allow the material, moving from A to B along the Y-Y axis in the compartment of the left-handed screw conveyor 5, to be discharged, as depicted by the arrows R, into the compartment of the right-handed screw conveyor 6 and to return from B to A again along to the Y-Y axis. The Y-Y axis is the central axis of the main case 1, as shown for example in Fig. 1.

The shaft of the left-handed screw conveyor 5 is supported by the bearings 17 housed in the headers 18 and 19, which are assembled to the main case 1 via the tie rods 20.

In Fig. 4, which is the front view from the discharge side, the position of the load cells 3 that support the mixing/metering unit can be seen, as they are fixed to the supporting framework 2.

With regard to the weighing system described above, different systems for weighing and/or supporting the mixing/metering unit are not excluded, for example by installing load cells below the case 1.

In Fig. 5, through the hole of the loading hopper 7, the terminals of the left-handed 5 and right-handed 6 screw conveyors can be seen. These screw conveyors, since they both turn in the same clockwise direction, cause the material to circulate in the compartments of the respective chambers G and H and, as it continues to turn along the Y-Y axis from A to B and from B to A, it is mixed and, since it is always in motion, is not allowed to become compact.

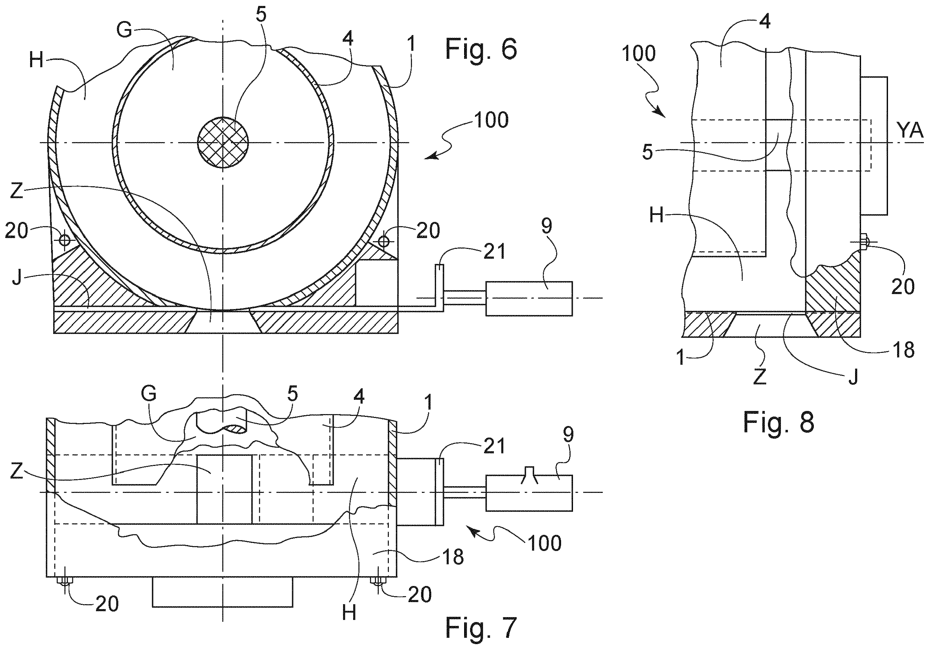

Fig. 6 highlights the discharge port Z, which, through the bulkhead 21 driven by the actuator 9, modulates, also according to the speed of rotation of the screw conveyors, the amount of material to be fed to the hopper 8 that conveys the metered material to the processing system or other types of treatments, e.g., mixers, fillers, etc.

Fig. 7 is the plan view of the discharge port Z which coincides with the end of the main body 1 so that there are no stagnation points.

Fig. 8 is the partially cut-away side view, where the discharge Z and the sliding compartment of the bulkhead J are highlighted.

In the industry field, the metering component is important to achieve a quality end result in the production path of items of plastic type according to a composition recipe for a given product.

Another example of use, in the industrial field, could be the metering of additives, such as lime, in water purification plants.

Another example of use, in the industrial field, could be the metering of flours or various ingredients in the food packaging system.

The device 100, which is the subject of the invention, is positioned upstream of the material transformation process, for example, transformation of plastic material. It receives all the necessary components into the hopper 7 through the port K, from where the components enter the compartments of the screw conveyors. The product(s) located in chamber G of the screw conveyor 5, which has a left-handed helix, conveys the material from A to B, the latter exiting through the compartments X and passing into the chamber H of the screw conveyor 6. Both the screw conveyors rotate clockwise but the screw conveyor 6 has a right-handed helix, so it conveys the material back from B to A.

As a result of this recirculation, if the components introduced into the hopper 7 are of different types, they are mixed and continue to be mixed until, the material is released in a programmed manner through the discharge port Z located on the opposite side and in the lower part of the port K, also according to the speed of rotation of the screw conveyors, through the bulkhead 21 regulated by the actuator 9.

The load cells 3, which hold the dosing/mixing device in suspension, monitor how much material has been released from the port Z and, accordingly, regulate how much material should enter from the port K by acting on the opening devices located upstream of the hopper 7.

## Claims

1. Metering/mixing device (100), comprising:
- a double-chamber body, comprising an outer case (1) and an inner jacket (4) which are assembled by means of two headers (17) and (19);
- a left-handed screw conveyor (5) equipped with a shaft and housed inside the jacket (4) and a right-handed screw conveyor (6) housed inside the case (1), to move material to be mixed, in which the left-handed screw conveyor (5) is concentric with respect to the jacket (4), and the right-handed screw conveyor (6) turns outside the jacket (4) and inside the case (1) and is concentric to said left-handed screw conveyor (5), the right-handed screw conveyor (6) being keyed to the shaft of the left-handed screw conveyor (5), said shaft protruding from one of said headers (19);
- a motor (10) arranged on a part protruding from the header (19), to move, via a system for kinematic connection, the shaft of the left-handed screw conveyor (5);
- a supporting framework configured to support the case (1) by means of load cells (3), said load cells (3) being configured to detect the weight of the material inside the case (1) and to transmit it to a command and control system,
wherein said command and control system is configured to, depending on the weight detected, regulate the amount of material that is discharged through a discharge port (Z) and to provide a command to replenish the material contained in the metering/mixing device (100).

2. Device (100) according to claim 1, **characterized in that** the mixing and conveying to the discharge port (Z) is performed by the left-handed screw conveyor (5) and the right-handed screw conveyor (6).

3. Device (100) according to claim 1 or 2, **characterized in that** the left-handed screw conveyor (5) and the right-handed screw conveyor (6) rotate clockwise around the (Y-Y) axis of said case (1).

4. Device (100) according to one of the preceding claims, wherein the discharge port (Z) is regulated by an actuator (9).

5. Device (100) according to claim 4, in which the amount of metered material, through the discharge port (Z), is controlled by the actuator (9) and by the speed of the left-handed screw conveyor (5) and the right-handed screw conveyor (6) by processing the data from the load cells (3).

6. Device (100) according to one of the preceding claims, configured so that the amount of material entering the case (1) from a loading port (K) through a loading hopper (7) is controlled by processing the data from the load cells (3).

7. Device (100) according to one of the preceding claims, configured so that the left-handed screw conveyor (5) and the right-handed screw conveyor (6) are driven by the motor (10) through a gear motor (11), a toothed belt (13) and toothed pulleys (12,14).

8. Device (100) according to one of the preceding claims, **characterized in that** the motor (10) is a stepper or brushless type and comprises an encoder to control the number of revolutions to vary the rotation speed of the left-handed screw conveyor (5) and the right-handed screw conveyor (6).

9. A metering device comprising:
- A cylindrical double-chamber case for material to be metered and/or mixed.
- Two cylindrical screw conveyor scrapers, of which one is left-handed and one is right-handed to mix and keep the material to be metered moving continuously at an adjustable and programmable speed;
- Drive means adapted for operating and controlling the screw conveyor scrapers;
- A port for discharging the material contained in the metering device into a processing system through a controlled straight opening;
- A weighing system to weight the material to be metered.
